# EUROPEAN PATENT APPLICATION

(11) **EP 2 302 760 A2**
(43) Date of publication of application: **30.03.2011**
(21) Application number: 09754009.0
(22) Date of filing: 28.05.2009
(51) Int. Cl.: H02J 7/02

(54) **AUTOMATIC METHOD FOR CONTROLLING A HIGH-FREQUENCY INDUCTIVE COUPLING POWER TRANSFER SYSTEM**

(30) Priority: 29.05.2008 ES 200801611
(71) Applicant: Fundación CIRCE - Centro de Investigación de Recursos y Consumos Energéticos, María de Luna, 3 50018 Zaragoza (ES)
(72) Inventor: VILLA GAZULLA, Juan Luis, E-50018 Zaragoza (ES); LLOMBART ESTOPIÑÁN, Andrés, E-50018 Zaragoza (ES); SALLÁN ARASANZ, Jesús, E-50018 Zaragoza (ES); SANZ OSORIO, José Francisco, E-50018 Zaragoza (ES); MELERO ESTELA, Julio Javier, E-50018 Zaragoza (ES)
(74) Representative: Schäfer, Matthias W.
(86) International application number: PCT/ES2009/070190
(87) International publication number: WO 2009/144355

(57) **Abstract**

The invention relates to an automatic method for controlling a high-frequency inductive coupling power transfer system, which maintains the transferred power at a load equal to the nominal load with misalignments of up to 99% of the area of the secondary, in which the supply voltage and frequency of the system are controlled using a closed-loop control system in order to regulate the misalignments and the variation in the distance to the secondary and, in this way, transfer the nominal power

## Description

### OBJECT OF THE INVENTION

This invention relates to an automatic method for controlling a high-frequency inductive coupling power transfer system that maintains the power transferred to the load equal to the nominal load for misalignments of up to 99% of the area of the secondary.

The automatic method controls the supply voltage and frequency of the inductive coupling power transfer (hereinafter, "ICPT") system using a closed-loop control system to regulate the misalignments and the variation in the distance from the secondary to transfer the nominal power.

The automatic method for controlling the ICPT system is implemented in a battery charging system for electric vehicles, both while stationary and moving, without using auxiliary means for positioning or moving vehicles closer to the primary.

### BACKGROUND OF THE INVENTION

ICPT systems are known in the state of the art as systems formed by two electrically-isolated coils or windings that are magnetically coupled through the air that can transfer power very efficiently.

In the air, the coupling between the coils is much less than for transformers or motors in which the coupling is done via a magnetic core. For this reason, to achieve high levels of performance in the transfer, it is necessary to operate at high frequencies and with coils compensated with capacitors in both windings. These coupling capacitors make the system work in resonance, and, therefore, the desired power is transferred with a high level of performance.

ICPT systems have two distinct parts:
- A primary system comprising a coil of *N*₁ turns and *S*₁ section, a compensation system and a high-frequency power supply system that feeds the primary with a modulated voltage using PWM techniques.
- A secondary system or pick-up comprising a receiver coil of *N*₂ turns and S₂ section, a compensation system and a converter that adapts the voltage and current transferred to meet the requirements of the electrical load.

The basic compensation systems are made up of a resonance capacitor Cₓ connected in series and/or in parallel. There are, therefore, four different types of compensation depending on the series or parallel connection of the capacitors to the primary and secondary coils.

In addition to these basic systems, more complex compensation systems exist with combinations of capacitors and coils connected in series and/or in parallel in the primary and/or the secondary.

One of the applications of ICPT systems is the feeding of power to electric vehicles (moving or stationary) via one or more conductors underneath the vehicles. These systems are known as moving secondary systems and fixed secondary systems respectively.

For these applications, there are two physical systems that differ based on how the flux is captured by the secondary: the normal flux capture systems and the tangential or transverse flux capture systems.

The transverse flux systems are, in their basic form, made up of a single conductor in the primary located below the asphalt that acts as a transmission line and a secondary coil in a transverse position in relation to the primary conductor. As this system has a very low mutual inductance coefficient, the secondary coil must be wound on a ferrite core.

This system tolerates very small misalignments as the power transferred falls sharply when the secondary coil is moved to the left or right. There are solutions comprising multiple conductors that allow an amount of misalignment provided that the secondary coil does not pass the vertical limits marked by the conductors at the ends. These solutions are much more expensive and the coupling coefficient is still low.

The normal flux capture systems have two flat coils facing each other and a mutual inductance coefficient "M" that is much greater than that of the transverse flux capture systems. The primary coil has a width equivalent to that of the secondary although it can be much longer if the aim is to transfer power over a greater area or to set up a charging zone for moving vehicles.

How the misalignment affects the behaviour of these systems is greatly influenced by the type of compensation used. When the compensation in the primary is in parallel, i.e., PS and PP, the behaviour is the same as for transverse flux systems: power transfer capability is lost as the secondary is moved away from its centred position.

When compensation in the primary is in series, i.e., SS, series-series, and SP, series-parallel, the power transferred increases as the secondary moves away from its centred position, reaching 2.5 times the nominal power for movements of 50% of the secondary coil area, which endangers the integrity of the supply system and the coils; the power sharply diminishes for greater misalignments.

In existing battery charging systems, the positioning of the coils is done with the aid of auxiliary electromechanical systems that provide a perfect alignment and always small coupling distances in the vertical direction so the transfer process is optimal. This system of alignment is expensive and slow.

This invention, an automatic method for controlling a high-frequency inductive coupling power transfer system, solves all the problems previously associated with inductive coupling power transfer systems, maintaining the power transferred equal to the nominal power for misalignments of up to 99% of the area of the secondary and avoiding the electrical risks for the supply system.

### DESCRIPTION OF THE INVENTION

This invention is an automatic method for controlling a high-frequency inductive coupling power transfer system that maintains the power transferred to the load equal to the nominal at an optimal performance level (keeping the system in resonance at all times) for misalignments in the system of up to 99% of the area of the secondary coil.

In other words, when at least 1% of the area of the secondary coil is facing the primary coil, the power transferred to the load is maintained at the nominal power level using this automatic control method. The misalignments can be in either of the two axes of the horizontal plane or in a combination of both directions.

This method is applicable both to battery charging systems with a fixed secondary and uninterruptible power supply systems for batteries with a mobile secondary.

The automatic method for controlling the ICPT system includes an input voltage supply system, a closed-loop control system, the inductive coupling between the winding of the primary and the winding of the secondary, the battery charging system or the uninterruptible power supply system for the batteries with a mobile secondary that also has an electromagnetic emissions shielding system to protect internal parts and external elements that might be affected by the radiation.

The input voltage of the high-frequency power supply system is modulated by the closed-loop control system that has a PWM (pulse-width modulation) frequency modulator that uses a square wave whose pulse width is modulated by modifying the duty cycle of the input signal.

The control system gets the information on the power and the phase shift between the voltage and current, modifies the power supply frequency so that the phase shift between the voltage and current is null to maximise system performance, and modifies the system's supply voltage so that the supply power is that which the system demands.

For configurations with series-series compensation, the phase shift must be measured in terms of the secondary current and voltage; for the rest of the basic compensation systems, primary current and voltage can also be measured as the phase shift is reflected directly. The power is determined using the same variables used to determine the phase shift.

This closed-loop control allows:
- Not applying all the voltage to the inductive coupling system in the initial instant as the consumed current can reach up to 2.5 times the steady-state current.
- Controlling the power transferred to the battery charging system. The power transferred can be varied by varying the width of the square wave.
- Controlling the coupling system for misalignments and changes in the distance because voltage control allows adequately transferring the nominal power of the coupling even with high misalignment values or distance variation.

By performing the control on PS, parallel-series and PP, parallel-parallel, compensations-which are inefficient without this control as when the coils or windings become misaligned the power absorbed and the power transferred to the load decrease sharply-constant power is maintained by increasing the supply voltage.

By performing the control on SS and SP compensations-which are unstable without this control as when the coils or windings become misaligned the power absorbed and the power transferred to the load increase-constant power is maintained by decreasing the supply voltage.

Thus, the above-mentioned control makes the basic compensations more reliable and robust for coil misalignments as the vehicle can receive the nominal power even with high misalignments of around 99%.

As the primary and secondary coils become misaligned, the control system maintains the power transferred to the load constant by adjusting the frequency and modulus of the supply's voltage and current.

It is important to note that, in general, the greater the misalignment, the higher the voltage or current that must be fed to the ICPT system; therefore, the determining of a maximum misalignment implies specific requirements of the power supply. I.e., the power supply needs to be oversized with respect to the nominal conditions for a perfect alignment. This means that it is not the control system that imposes the maximum misalignment limits; these are determined by the size of the power supply.

The proposed control method minimizes the voltage and current of the power supply to assure that the system always operates at optimal performance.

The control system also assures the integrity of the system in the following manner:
It maintains the power assigned for a given misalignment until the supply system reaches its nominal value. For greater misalignments, for those which require more power, it delivers the maximum power possible while two conditions are met: (1) the performance is optimal (the system is kept in resonance at all times) and (2) the power delivered is the maximum supported by the supply system.

Furthermore, the inductive coupling secondary device uses shielding to confine the flux to the surface of this secondary, meaning that the amount of flux that leaves this area that might affect a person close to the charging system is negligible. It also increases the mutual inductance coefficient and makes it possible for the same power to be transferred across the same distance with a lower operating frequency.

Basically, the invention is an automatic method for controlling a high-frequency inductive coupling power transfer device that is characterised by having a closed-loop control system that controls misalignments of up to 99% of the area of the secondary winding by controlling the frequency and the modulus of the input voltage of a high-frequency power supply system, which means that the power transferred to a battery charging systems is kept equal to the nominal power, both for battery charging systems with a fixed secondary and uninterruptible power supply systems with a mobile secondary.

### DESCRIPTION OF THE DIAGRAMS

This specification is accompanied by a set of diagrams and graphs that illustrate the preferred example yet in no way limit the invention.

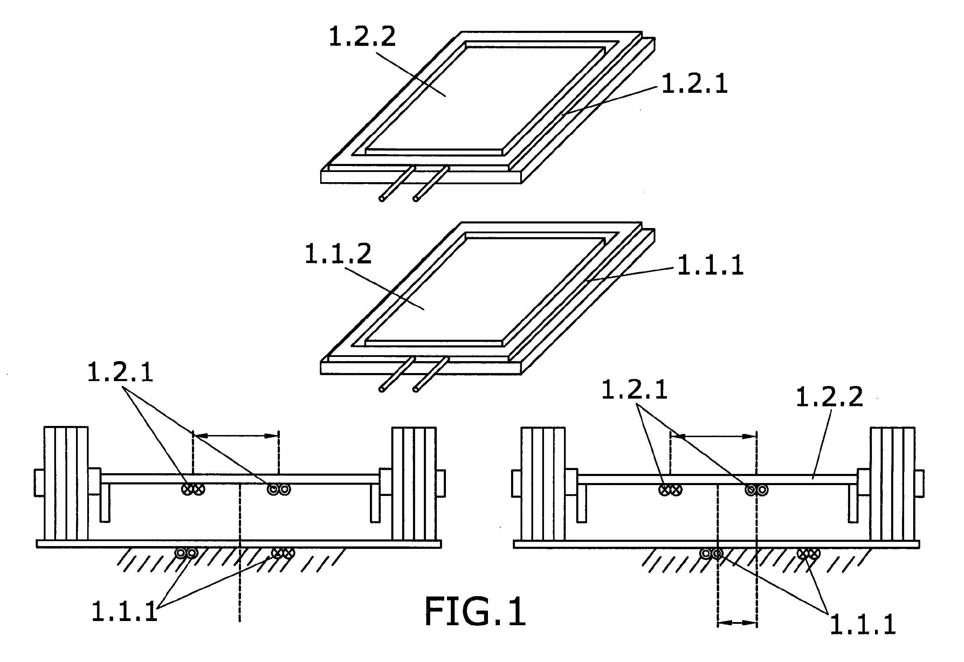

The top of Figure 1 illustrates a perspective view of an ICPT system for charging vehicle batteries; the bottom part shows sectional views of this system in two scenarios: aligned, on the left, and misaligned, on the right.

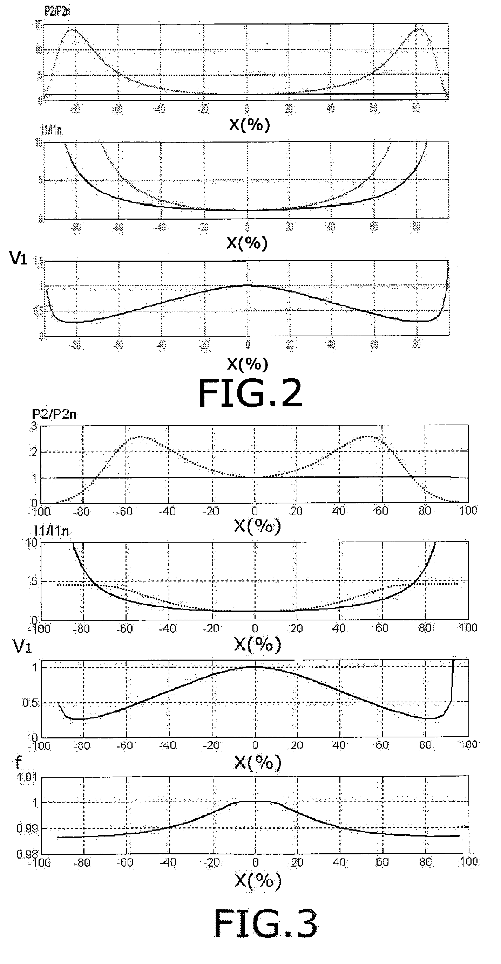

The continuous-line curves in Figure 2 show the load, absorbed current and corrected voltage with respect to the nominal power for misalignment X for an ICPT system with SS compensation. The dashed-line curves represent when the control is not used.

The continuous-line curves in Figure 3 show the load, absorbed current, corrected voltage and corrected frequency with respect to the nominal power for misalignment X for an ICPT system with SP compensation. The dashed-line curves represent when the control is not used.

Figure 4 illustrates the change in the power absorbed and supplied to the load with respect to the nominal for misalignment X for an ICPT system with SPS configuration.

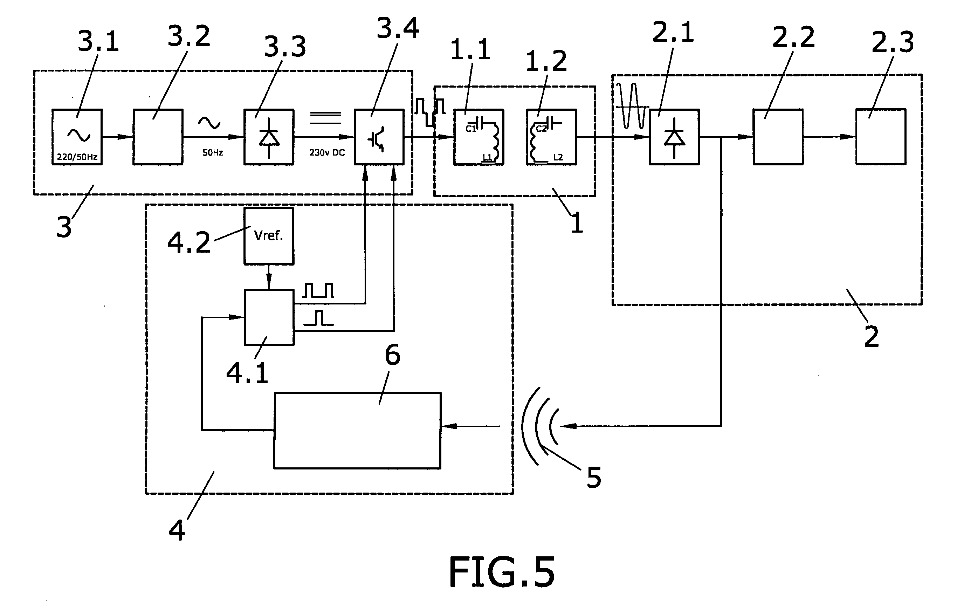

Figure 5 shows a block diagram of the automatic control method for the SS, PS and SPS configurations with series compensation in the secondary.

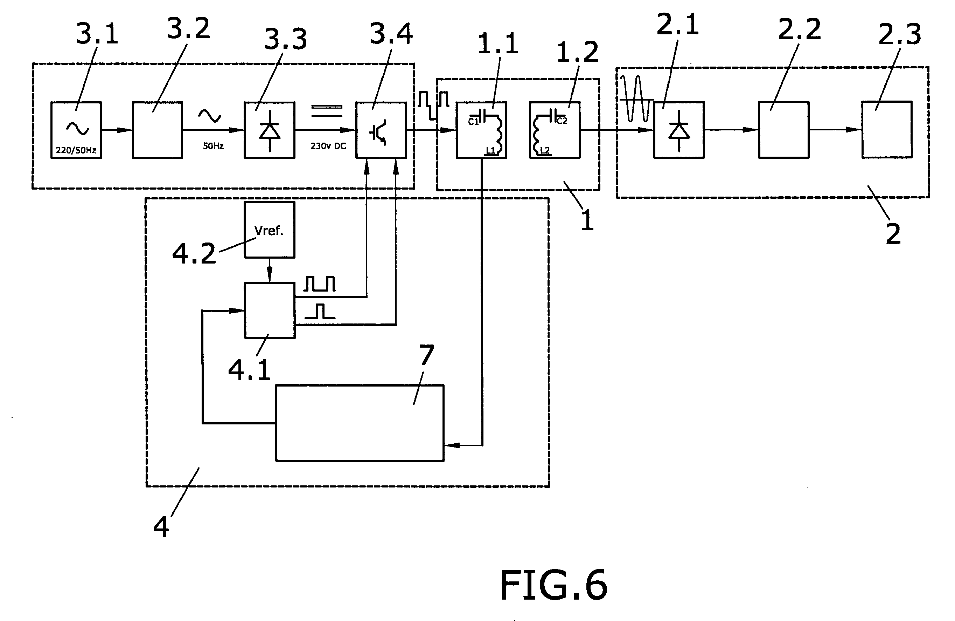

Figure 6 shows a block diagram of the automatic control method for the SP and PP configurations with parallel compensation in the secondary.

Figure 7 comprises three tables which contain a series of values for the maximum deviation of performance, power delivered to the load, absorbed power, current in the primary, voltage in the primary and frequency for the nominal values for different values of misalignment X. The top table is for SP configuration; the one in the middle, for PS configuration; and the bottom table is for SPS configuration.

### PREFERRED EMBODIMENT OF THE INVENTION

In light of the aforementioned, this invention is an automatic method for controlling a high-frequency power transfer system with inductive coupling (1) that maintains the power transferred to a vehicle battery charging system (2) equal to the nominal power for misalignments of up to 99% of the area of the secondary (1.2) for any type of basic or complex compensations that may be used.

In this preferred embodiment example, SPS compensation configuration is used with a normal flux system as this is the configuration that shows the best static behaviour for misalignments.

The SPS compensation configuration has a capacitor in series and another in parallel in the primary (1.1) and a capacitor in series in the secondary (1.2).

The power supply configuration, which is integrated into a power supply system (3), is push-pull or similar as this allows increasing or decreasing the average value of the voltage supplied to the inductive coupling (1) regardless of the compensation used.

A closed-loop control system (4) is used to perform the control by using a PWM power converter (4.1), which, in this example, is a one-pulse PWM modulator; the usual frequencies for power transfer being between 10 and 20 kHz for high-power systems with higher frequencies for low powers. The current is sinusoidal, even for low values for the duty cycle, provided that the power supply frequency is adjusted so that the whole system is in resonance.

The closed-loop control system (4) gets the supply voltage and current delivered to the charging system (2) in the secondary system (1.2). This information is transferred via radio (5) to the primary system (1.1).

The closed-loop control system (4) analyses the phase shift between the voltage and the current to keep it as close to zero as possible to maximise performance. It also calculates the power delivered so that the supply voltage is adjusted to keep the power equal to that assigned or equal to the limit of the supply system if this limit is reached before the set maximum power is reached. The closed-loop control system (4) is implemented using a digital PI regulator.

The automatic control method controls the inductive coupling (1) system with SPS configuration for misalignments of up to 99% between the primary (1.1) and the secondary (1.2) as the nominal power of the inductive coupling (1) is adequately transferred.

In configurations with SP, PS and PP compensation, the size of the secondary (1.2) does not need to be measured for the control of the system as when there is misalignment between the primary (1.1) and the secondary (1.2), the primary current is delayed with respect to the voltage. This phase shift between the voltage and the current in the primary (1.1) is measured (7) to obtain direct information on the decoupling that is occurring; therefore, the voltage and frequency can be changed to correct this.

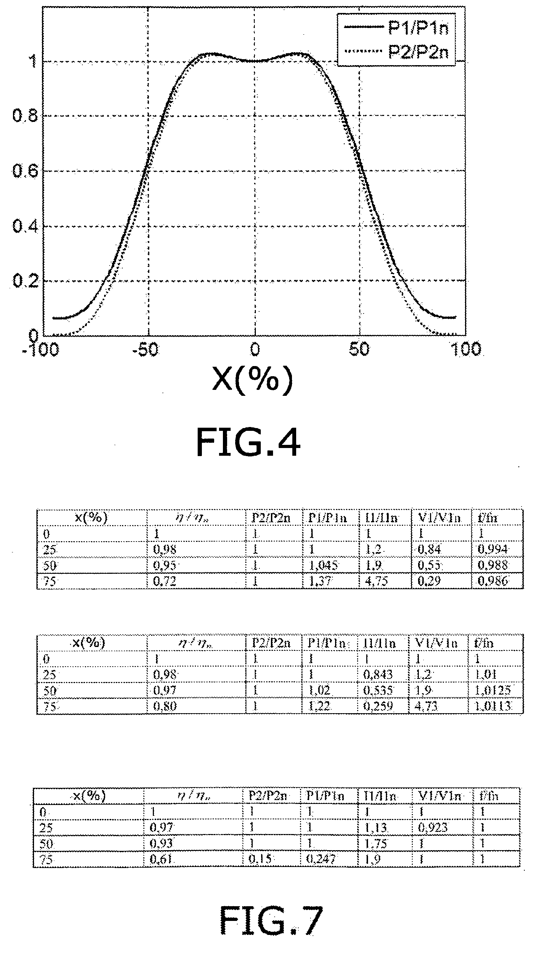

Figure 7 contains a list of maximum deviation values for the different variables in the system for different misalignment values. For example, for a misalignment of 50% in a system with SP compensation, performance is reduced by 5%, delivered power remains constant, power in the primary is increased by 4.5%, current in the primary is increased by 90% and voltage is reduced by 45%; all of these being maximum deviations with respect to the nominal parameters with a perfect alignment.

The supply system (3) has an AC power supply (3.1), a transformer (3.2), a DC-AC converter (3.3) and an H-bridge (3.4).

In the control system (4), there is a reference voltage (4.2) for the PWM control (4.1), whereas in the battery charging system (2), there is a DC-AC converter (2.1), a DC-DC converter (2.2) and the load (2.3).

As shown in Figure 2, for both the primary (1.1) and the secondary (1.2), some embodiment examples use flat, opposing coils or windings (1.1.1, 1.2.1), whereas the above-described method is also applicable in inductive couplings (1) where the winding (1.1.1) of the primary (1.1) is longer than the winding (1.2.1) of the secondary (1.2) so that, in this case, there is no longitudinal misalignment given that while the winding (1.2.1) of the secondary (1.2) is found in the vertical direction of the winding (1.1.1) of the primary (1.1), the power delivered remains constant. This removes an element of freedom and only decoupling in the transverse direction need to be controlled.

The essence of this invention is not affected by changing the materials, form, size or placement of the component elements, which are not described restrictively, this basic essence being enough for an expert to reproduce the invention.

## Claims

1. An automatic method for controlling a high-frequency inductive coupling power transfer device wherein it has a closed-loop control system (4) that controls misalignments of up to 99% of the area of the winding (1.2.1) of the secondary (1.2) owing to the fact that
• the closed-loop control system (4) gets the information on the power transferred to the charging system (2) and the phase shift between the voltage supplied by a supply system (3) and the current absorbed,
• modifies the supply frequency so that the phase shift between the voltage and current is null,
• modifies the supply voltage of the supply system (3) so that the supply power is that required by the system, and
• maintains the power designated for a given misalignment until the supply system (3) reaches its nominal value.
meaning that the power transferred to a battery charging system (2) is kept equal to the nominal power, both for battery charging systems (2) with a fixed secondary (1.2) and for uninterruptible power supply systems (3) with a mobile secondary (1.2).

2. An automatic method for controlling a high-frequency inductive coupling power transfer device as claimed in Claim 1 wherein for greater misalignments that need more than the designated level of power, the maximum power possible is delivered, keeping the system in resonance at all times, and the power delivered is the maximum supported by the power supply system (3).

3. An automatic method for controlling a high-frequency inductive coupling power transfer device as claimed in Claim 1 wherein the phase shift and the power transferred to the load are obtained via measuring (6) the voltage and current of the secondary for all the configurations, it also being possible to measure (7) the voltage and the current of the primary in systems with PS or parallel-series, SP or series-parallel and PP or parallel-parallel compensation as the phase shift is reflected directly.

4. An automatic method for controlling a high-frequency inductive coupling power transfer device as claimed in Claim 1 wherein the input voltage of the supply system (3) is modulated by the closed-loop control system (4) using a PWM power converter (4.1) that uses a square wave whose pulse width is modulated by modifying the duty cycle.

5. An automatic method for controlling a high-frequency inductive coupling power transfer device as claimed in Claim 4 wherein it allows not applying all the voltage to the inductive coupling system (1) in the initial instant as the current consumed can be up to 2.5 times the steady-state current.

6. An automatic method for controlling a high-frequency inductive coupling power transfer device as claimed in Claim 4 wherein the power transferred can be varied by varying the width of the square wave.

7. An automatic method for controlling a high-frequency inductive coupling power transfer device as claimed in Claim 4 wherein the input voltage of the power supply system (3) is an H-bridge and a one-pulse PWM control is performed where the usual frequencies for power transfer are between 10 and 20 kHz for high-power systems with higher frequencies for low powers.

8. An automatic method for controlling a high-frequency inductive coupling power transfer device as claimed in Claim 1 wherein configuration of the power supply integrated in the power-supply system (3) is push-pull or similar as this allows increasing and decreasing the average value of the voltage delivered to the inductive coupling (1).

9. An automatic method for controlling a high-frequency inductive coupling power transfer device as claimed in Claim 1 wherein it is applicable for inductive couplings (1) where the winding (1.1.1) of the primary (1.1) is longer than the winding (1.2.1) of the secondary (1.2) so that, in this case, there is no longitudinal misalignment given that when the winding (1.2.1) of the secondary (1.2) is found in the vertical direction of the winding (1.1.1) of the primary (1.1), the power delivered remains constant.

10. An automatic method for controlling a high-frequency inductive coupling power transfer device as claimed in Claim 1 wherein the battery charging system (2) has an electromagnetic emissions shielding system to protect the internal parts and external elements that could be affected by the radiation.
